# EUROPÄISCHE PATENTANMELDUNG

(11) **EP 3 517 316 A1**
(43) Veröffentlichungstag der Anmeldung: **31.07.2019**
(21) Anmeldenummer: 19153604.4
(22) Anmeldetag: 24.01.2019
(51) Int. Cl.: B60B 27/00, B60B 27/02, B60B 27/04, F16D 41/32

(54) **NABE**

(30) Priorität: 25.01.2018 DE 102018101725
(71) Anmelder: DT Swiss AG, 2504 Biel (CH)
(72) Erfinder: Walthert, Martin, CH-3270 Aarberg (CH); Spahr, Stefan, CH-2543 Lengnau (CH)
(74) Vertreter: BSB Patentanwälte Schütte & Engelen Partnerschaft mbB

(57) **Zusammenfassung**

Nabe (1) für Fahrräder (100) mit einer Nabenachse (2), einem Nabengehäuse (3), einem Rotor (4) und einem Zahnscheibenfreilauf (5), welcher zwei miteinander zusammenwirkende Freilaufkomponenten (6, 7) aufweist, nämlich eine nabenseitige Freilaufkomponente (6) und eine rotorseitige Freilaufkomponente (7). Die Freilaufkomponenten (6, 7) weisen jeweils axiale Eingriffselemente (8, 9) zum Eingriff ineinander auf und werden über eine Vorbelastungseinrichtung (11, 12) in Eingriffsstellung (10) vorbelastet. Die nabenseitige Freilaufkomponente (6) ist in einem Gewindering (32) axial verschiebbar aufgenommen und ist in Antriebsrichtung drehfest mit dem Nabengehäuse (3) gekoppelt. Die rotorseitige Freilaufkomponente (7) ist drehfest an dem Rotor (4) vorgesehen, um in der Eingriffsstellung (10) der beiden Freilaufkomponenten (6, 7) eine Drehbewegung von dem Rotor (4) auf das Nabengehäuse (3) zu übertragen. Der Gewindering (32) verfügt über ein mehrgängiges Gewinde (34) und ist mit einem mehrgängigen Gewinde (35) des Nabengehäuses (3) verschraubt.

## Beschreibung

Die vorliegende Erfindung betrifft eine Nabe für wenigstens teilweise muskelbetriebene Fahrzeuge und insbesondere Zweiräder und vorzugsweise Fahrräder, wobei die Nabe ein Nabengehäuse umfasst, welcher insbesondere mit zwei an gegenüberliegenden Endbereichen des Nabengehäuses angeordneten Wälzlagern gegenüber einer Nabenachse drehbar gelagert ist. Die Nabe weist einen Rotor zur drehfesten Anordnung wenigstens eines Ritzels auf, der insbesondere mit wenigstens zwei Rotorlagern gegenüber der Nabenachse drehbar gelagert ist. Zwischen dem Rotor und dem Nabengehäuse ist ein Freilauf vorgesehen.

Außer bei Fahrrädern kann die Nabe auch bei anderen teilweise muskelbetriebenen Fahrzeugen und Zweirädern eingesetzt werden, die zum Beispiel über einen elektrischen Hilfsantrieb verfügen. Insbesondere wird die Nabe bei sportlichen Fahrrädern eingesetzt. In allen Ausgestaltungen wird die erfindungsgemäße Nabe bei solchen Fahrzeugen und insbesondere Fahrrädern eingesetzt, die im normalen und regelmäßigen bestimmungsgemäßen Betrieb wenigstens teilweise muskelbetrieben werden.

Naben für Fahrräder werden insbesondere im sportlichen und im semiprofessionellen und professionellen Bereich hohen und höchsten Belastungen ausgesetzt. Ein generelles Problem bei Freiläufen von Fahrradnaben ist die Sicherstellung der Funktion bei unterschiedlichsten Drehzahlen. Sowohl bei sehr geringen Geschwindigkeiten als auch bei sehr hohen Geschwindigkeiten muss eine ordnungsgemäße Funktion gewährleistet werden.

Weiterhin muss der Freilauf einer Fahrradnabe zuverlässig Drehmomente von einer Stärke übertragen können, wie sie im Sportwagenbereich auftreten. Dabei können die auftretenden Flächenpressungen bei Fahrrädern sogar noch größer werden, da die Abmessungen kleiner sind.

Der Freilauf muss beim Aufbringen von Antriebskraft sehr schnell und zuverlässig einen Kraftschluss herstellen, während der Freilauf andererseits nur eine geringe Reibung beim Rückwärtstreten oder Nichttreten aufweisen soll. Bei Bergauffahrten oder zum Beispiel starken Beschleunigungen wirken große dynamische Belastungen auf die Nabe ein, sodass die Einzelteile der Nabe und die Nabe insgesamt dynamisch betrachtet werden müssen. Die Achse kann sich beispielsweise bei hohen Belastungen durchbiegen, auch wenn die Achse durch konstruktive Maßnahmen und durch die eingesetzten Materialien möglichst starr ausgebildet wird.

Im Stand der Technik sind unterschiedliche Freiläufe bekannt geworden. Eine in der Montage und bei der Wartung einfach zu handhabende Hinterradnabe ist mit der DE 198 47 673 A1 bekannt geworden. Bei dieser Nabe erfolgt die Drehmomentübertragung über zwei Zahnscheiben, die an den aneinander anliegenden Seitenflächen über axiale und ineinandergreifende Verzahnungen verfügen. In Antriebsrichtung wird das aufgebrachte Drehmoment zuverlässig übertragen, während die Zahnscheiben sich bei der umgekehrten Drehrichtung axial auseinanderschieben und so einen Freilauf ermöglichen. Die eine der Zahnscheiben wird axial verschiebbar in dem Rotor aufgenommen und die andere Zahnscheibe axial verschiebbar in dem Nabengehäuse. Da das Nabengehäuse meist aus einem Leichtmetall besteht, wird in das Nabengehäuse ein Gewindering aus Stahl eingeschraubt, in welchem die Zahnscheibe axial verschiebbar geführt wird. Dadurch wird das Nabengehäuse vor dem direkten Kontakt mit der Zahnscheibe geschützt. Nachteilig ist es aber, dass der Gewindering durch die sich beim Treten ergebenden Belastungen in das Nabengehäuse eingetrieben wird. Dadurch wird das Nabengehäuse lokal einer hohen Belastung ausgesetzt, wodurch sich das Nabengehäuse im Bereich des Gewinderings aufspreizen und unter Umständen sogar brechen kann. Um das zu verhindern, wird die Wandstärke des Nabengehäuses derart erhöht, dass die auftretenden Belastungen zuverlässig abgeführt werden können. Dadurch steigt aber das Gesamtgewicht.

Es ist deshalb die Aufgabe der vorliegenden Erfindung, eine Nabe zur Verfügung zu stellen, die insbesondere leichter und steifer ist und bei der konstruktiv geringe oder noch geringere Verformungen im Betrieb ermöglicht werden.

Diese Aufgabe wird gelöst durch eine Nabe mit den Merkmalen des Anspruchs 1. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Eine erfindungsgemäße Nabe ist für wenigstens teilweise muskelbetriebene Fahrzeuge und insbesondere Zweiräder und vorzugsweise Fahrräder vorgesehen und umfasst eine Nabenachse und ein Nabengehäuse, einen Rotor und einen Freilauf, wobei der Freilauf zwei miteinander zusammenwirkende Freilaufkomponenten aufweist, nämlich eine nabenseitige Freilaufkomponente und eine rotorseitige Freilaufkomponente. Die beiden Freilaufkomponenten weisen jeweils axiale Eingriffselemente zum Eingriff ineinander auf und werden über eine Vorbelastungseinrichtung in Eingriffsstellung vorbelastet. Die beiden Freilaufkomponenten sind in axialer Richtung relativ zueinander wenigstens zwischen einer Freilaufstellung und der ineinander eingreifenden Eingriffsstellung bewegbar. Die nabenseitige Freilaufkomponente ist in einem Gewindering axial verschiebbar aufgenommen und ist darüber drehfest mit dem Nabengehäuse gekoppelt. Die rotorseitige Freilaufkomponente ist drehfest an dem Rotor vorgesehen, um in der Eingriffsstellung der beiden Freilaufkomponenten eine Drehbewegung von dem Rotor auf das Nabengehäuse zu übertragen.

Dabei verfügt der Gewindering über ein mehrgängiges Gewinde und ist mit einem mehrgängigen Gewinde des Nabengehäuses verschraubt.

Die erfindungsgemäße Nabe hat viele Vorteile. Insbesondere ermöglicht die erfindungsgemäße Nabe einen leichteren und steiferen Aufbau. Ein erheblicher Vorteil wird dadurch erreicht, dass die Schraubverbindung zwischen dem Nabengehäuse und und der nabenseitigen Freilaufkomponente über ein mehrgängiges Gewinde mit wenigstens zwei Gewindegängen verfügt. Das Nabengehäuse und die nabenseitige Freilaufkomponente sind miteinander verschraubt, wobei die Gewinde an dem Nabengehäuse und/oder der nabenseitigen Freilaufkomponente jeweils über wenigstens zwei separate und axial voneinander beabstandete Gewindegänge verfügen. Durch eine solche Konstruktion wird eine größere Steigung der Gewindegänge im Vergleich zu einem eingängigen Gewinde ermöglicht. Der Steigungswinkel ist größer und damit ist die im verschraubten Zustand wirksame Axialkraft geringer. Dadurch wird durch den in das Nabengehäuse drängenden Gewindering weniger axialer Druck auf das Nabengehäuse ausgeübt. Dadurch, dass die Steigung größer ist, wird die Axialkraft im Vergleich zum Stand der Technik erheblich verringert. Das gilt insgesamt und nicht nur für einen Gewindegang. Die gesamte Axialkraft beider Gewindegänge, die natürlich summiert werden muss, ist kleiner als die axial wirkende Kraft bei nur einem Gewindegang mit gleicher Teilung. Es hat sich herausgestellt, dass in einer realen Konstruktion die wirksame Axialkraft spürbar geringer ist.

Grundsätzlich wird im Betrieb die nabenseitige Freilaufkomponente durch das Antriebsdrehmoment immer weiter in das Nabengehäuse hineingedrängt, wodurch die Antriebskräfte zu einem zunehmenden Druck auf das Nabengehäuse und innerhalb des Nabengehäuses führen. Das führt dazu, dass sich das Nabengehäuse im Stand der Technik durch die auftretenden Belastungen lokal verformen kann. Bei fehlerhafter oder zu knapper Dimensionierung konnte das im Stand der Technik zum Bruch des Nabengehäuses führen. Hier bietet die Erfindung den erheblichen Vorteil, dass die wirksamen Axialkräfte reduziert werden. Durch ein zweigängiges (oder dreigängiges) oder "n"-faches Gewinde wird der Steigungswinkel verdoppelt (verdreifacht) oder mit "n" multipliziert, während die Teilung gleich bleibt. Insgesamt sind die in axialer Richtung axial nach innen in das Nabengehäuse hin wirkenden Kräfte erheblich geringer, sodass keine oder doch wenigstens eine deutlich geringere Verformung des Nabengehäuses bei gleichen Wandstärken auftritt. Die Wandstärke kann reduziert werden und gleichzeitig kann die Sicherheit erhöht werden. Die Kräfte zur Deformierung des Nabengehäuses sind kleiner.

Die Selbsthemmung wird reduziert, was ebenfalls vorteilhaft für die Belastung ist. Die Selbsthemmung des Gewindes des Gewinderings ist aber noch groß genug, sodass ein eigenständiges Lösen nicht befürchtet werden muss. Außerdem ist das Lösen im Wartungsfall erheblich einfacher, wenn der Gewindering entfernt oder getauscht werden muss und deshalb ausgeschraubt werden muss.

Insgesamt werden mit der Erfindung das Gesamtgewicht und der Windwiderstand aufgrund eines möglichen verkleinerten Nabenaußendurchmessers verringert, außerdem nimmt die Belastbarkeit zu.

Vorzugsweise besteht der Gewindering aus einem stabileren Material als das Nabengehäuse. Vorzugsweise besteht das Nabengehäuse aus einem leichteren Material als der Gewindering. Das Nabengehäuse besteht vorzugsweise wenigstens teilweise oder vollständig aus einer Leichtmetalllegierung wie einer Aluminiumlegierung und/oder einer Magnesiumlegierung oder aus leichten Materialien wie Carbon und/oder faserverstärktem Kunststoff.

In vorteilhaften Weiterbildungen sind an dem Gewindering ein mehrgängiges Außengewinde und an dem Nabengehäuse ein mehrgängiges Innengewinde ausgebildet, welche im montierten Zustand miteinander verschraubt sind. Besonders bevorzugt ist der Gewindering im Wesentlichen oder nahezu vollständig oder vollständig in das Nabengehäuse eingeschraubt. Denkbar ist es aber auch, dass der Gewindering über ein mehrgängiges Innengewinde verfügt, welches auf ein entsprechendes Außengewinde am Nabengehäuse aufgeschraubt ist.

Vorzugsweise weist ein Gewindegang wenigstens eines der mehrgängigen Gewinde und insbesondere beider mehrgängiger Gewinde eine Steigung von wenigstens 1,5 mm auf. Wird dabei ein zweigängiges Gewinde eingesetzt, so weist jeder Gewindegang dann eine Steigung von 1,5 mm auf und es liegt eine Teilung von 0,75 mm vor. Dadurch wird bei einer größeren Steigung (z. B. 1,5 mm oder 2 mm) als im Stand der Technik (z. B. 1 mm) dennoch ein feineres Gewinde eingesetzt, wodurch der Gewindering noch besser in dem Nabengehäuse geführt wird. Dadurch wird die Freilaufkomponente noch besser zentriert. Außerdem sind die Axialkräfte aufgrund der geänderten geometrischen Bedingungen geringer.

In weiteren bevorzugten Ausgestaltungen beträgt eine Steigung eines Gewindegangs wenigstens eines der mehrgängigen Gewinde und vorzugsweise beider mehrgängiger Gewinde wenigstens 1,8 mm. Bei einem zweigängigen Gewinde und einer Steigung von 1,8 mm beträgt dann die Teilung 0,9 mm. Bei einem dreigängigen Gewinde liegt dann eine Teilung von 0,6 mm vor. Es wird in diesen Beispielen ein besonders feines Gewinde verwendet, während die Axialkräfte und auch die Hemmung verringert werden.

In bevorzugten Ausgestaltungen weist ein Gewindegang wenigstens eines der mehrgängigen Gewinde eine Steigung von wenigstens 2,5 mm oder 3,0 mm oder mehr auf. Werden beispielsweise drei Gewindegänge an den mehrgängigen Gewinden eingesetzt so beträgt bei einer Steigung von 3,0 mm die Teilung 1,0 mm. Dadurch kann bei unveränderter Teilung die Axialkraft erheblich verringert werden.

In bevorzugten Ausgestaltungen weisen die mehrgängigen Gewinde 2, 3, 4 oder mehr voneinander separate (und parallel zueinander ausgerichtete) Gewindegänge auf.

Vorzugsweise bilden die Eingriffselemente jeweils eine Axialverzahnung und besonders bevorzugt ist wenigstens eine der beiden Freilaufkomponenten als Zahnscheibe ausgebildet. Möglich ist es auch, dass beide Freilaufkomponenten jeweils als Zahnscheibe ausgebildet sind. Dabei können beide Zahnscheiben identisch ausgebildet sein, können sich aber auch in ihrer axialen Breite unterscheiden.

Es ist möglich und bevorzugt, dass die Zahnscheiben über einen konstanten hohlzylindrischen Innendurchmesser verfügen. Möglich ist es aber auch, dass ein Querschnitt einer Freilaufkomponente U- oder L-förmig gestaltet ist. Dann sind insbesondere an dem radialen Schenkel die Eingriffselemente vorgesehen oder ausgebildet.

In bevorzugten Ausgestaltungen weist die Freilaufkomponente eine unrunde Außenkontur auf und ist in einer entsprechend unrunden Innenkontur des Gewinderings oder des Rotors drehfest und axial verschiebbar aufgenommen. Eine solche unrunde Außenkontur der Freilaufkomponente kann polygonartig ausgebildet sein. Möglich und bevorzugt ist es, dass die unrunde Außenkontur der Freilaufkomponente als radiale Außenverzahnung ausgebildet ist. Insbesondere ist dann die unrunde Innenkontur des Gewinderings als passende oder angepasste radiale Innenverzahnung ausgebildet. Durch derartige Maßnahmen wird sichergestellt, dass ein drehfester Eingriff zwischen Freilaufkomponente und Gewindering oder Rotor vorliegt.

Die Vorbelastungseinrichtung kann über eine Federeinrichtung oder über mehrere separate Federeinrichtungen verfügen. Vorzugsweise werden die beiden Freilaufkomponenten jeweils separat von außen aufeinander zu gedrückt. Möglich ist es aber auch, dass eine Freilaufkomponente in axialer Richtung unbeweglich angeordnet ist und dass die andere Freilaufkomponente axial dagegen gedrückt wird, um den Freilauf in die Eingriffsstellung vorzubelasten.

In allen Ausgestaltungen kann die Vorbelastungseinrichtung beispielsweise eine oder mehrere Spiralfedern umfassen. Möglich ist es auch, dass die Vorbelastungseinrichtung über magnetische Federkräfte den Freilauf in die Eingriffsstellung vorbelastet.

Wenn die beispielsweise als Zahnscheibe ausgebildete Freilaufkomponente einen massiven Körper mit einem zylindrischen Durchgangsloch aufweist, ist es bevorzugt, dass die Vorbelastungseinrichtung auf das eine axiale Ende einwirkt, während am anderen axialen Ende stirnseitig die Eingriffselemente ausgebildet sind.

Bei Freilaufkomponenten, die einen hülsenförmigen axialen Körperabschnitt und eine Ringscheibe umfassen, an der stirnseitig die Eingriffselemente ausgebildet sind, ist es bevorzugt, dass die Vorbelastungseinrichtung in axialer Richtung gegen den radialen Schenkel der Freilaufkomponente drückt.

Es ist möglich, dass die Eingriffselemente der rotorseitigen Freilaufkomponente als Stirnverzahnung an dem Rotor ausgebildet ist. Dann kann die rotorseitige Freilaufkomponente einstückig mit dem Rotor ausgebildet sein oder axial fest an dem Rotor aufgenommen sein. Dann ist jeweils im Betrieb keine Axialverschiebung der Freilaufkomponente relativ zu dem Rotor möglich oder nötig.

Es ist besonders bevorzugt, dass die rotorseitige Freilaufkomponente axial weiter außen angeordnet ist als die nabenseitige Freilaufkomponente. Insbesondere grenzen die nabenseitige Freilaufkomponente und die rotorseitige Freilaufkomponente im Eingriffszustand axial aneinander an. Besonders bevorzugt greifen die Freilaufkomponenten axial und nicht radial ineinander ein.

Vorzugsweise umgeben sich die beiden Freilaufkomponenten im Eingriffsbereich nicht.

Weitere Vorteile und Merkmale der vorliegenden Erfindung ergeben sich aus der Beschreibung von Ausführungsbeispielen, die mit Bezug auf die beiliegenden Figuren im Folgenden erläutert werden.

In den Figuren zeigen:
- Fig. 1: eine schematische Seitenansicht eines mit einer erfindungsgemäßen Nabe ausgerüsteten Rennrades;
- Fig. 2: eine schematische Seitenansicht eines mit einer erfindungsgemäßen Nabe ausgerüsteten Mountainbikes;
- Fig. 3: einen schematischen Querschnitt durch eine erste erfindungsgemäße Nabe;
- Fig. 4: ein vergrößertes Detail aus Fig. 3;
- Fig. 5: eine Explosionsdarstellung des Zahnscheibenfreilaufs der Nabe nach Fig. 3; und
- Fig. 6: einen weiteren schematischen Querschnitt durch eine Nabe eines weiteren Ausführungsbeispiels.

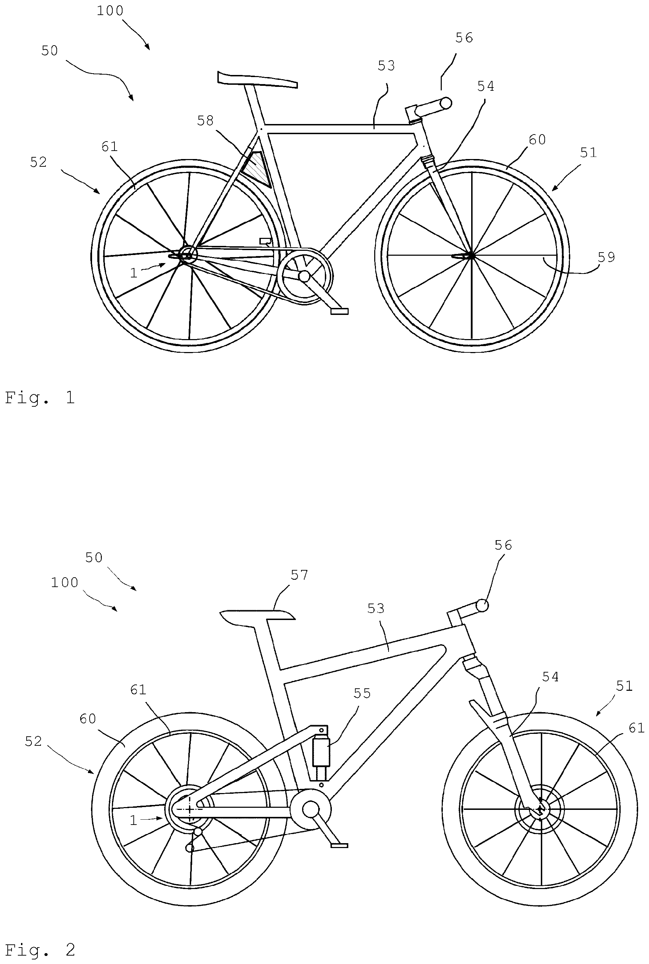

In Figur 1 ist ein Fahrzeug 100 in einer schematischen Seitenansicht abgebildet, welches hier als Zweirad 50 und insbesondere als Rennrad ausgeführt ist. Das Fahrrad 50 ist wenigstens teilweise muskelbetrieben und kann über einen elektrischen Hilfsantrieb verfügen.

Das Rennrad ist in einer stark schematischen Seitenansicht abgebildet und weist ein Vorderrad 51, ein Hinterrad 52 und einen Rahmen 53 auf. Ein Lenker 56 dient zur Steuerung und kann unterschiedlich ausgebildet sein. Neben einer Ausgestaltung als Rennlenker sind auch andere bekannte Ausgestaltungen möglich. Unterhalb des Sattels 57 kann eine Batterie 58 vorgesehen sein, die insbesondere bei elektrounterstützten Zweirädern Anwendung findet. Grundsätzlich kann eine solche Batterie 58 auch an anderen Stellen am Rahmen angebracht sein oder in den Rahmen integriert oder sonst wo untergebracht sein.

Bei dem Fahrrad gemäß Figur 1 ist der Reifen 60 als schlauchloser Reifen aufgeführt und wird beispielsweise auf die Felge 61 aufgeklebt. Bei dem Vorderrad 51 und dem Hinterrad 52 ist die Felge 61 jeweils über Speichen 59 mit der Nabe verbunden. Das Hinterrad 52 verfügt über eine erfindungsgemäße Nabe 1 als Hinterradnabe.

In Figur 2 ist ein Mountainbike als Fahrrad 50 in einer stark schematisierten Seitenansicht abgebildet, welches über ein Vorderrad 51, ein Hinterrad 52, einen Rahmen 53, eine gefederte Vordergabel 54 und einen Hinterraddämpfer 55 verfügt. In diesem Ausführungsbeispiel sind Scheibenbremsen vorgesehen. An dem Hinterrad 52 ist ebenfalls eine erfindungsgemäße Nabe 1 vorgesehen.

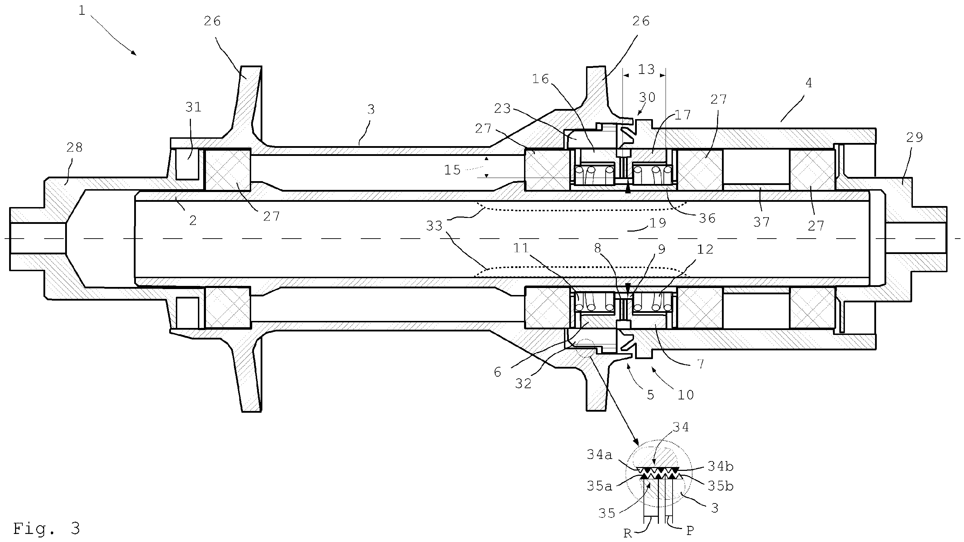

Figur 3 zeigt einen stark schematischen Querschnitt durch eine erfindungsgemäße Nabe 1 für ein Fahrrad 50 gemäß Figur 1 oder Figur 2.

Die erfindungsgemäße Nabe verfügt über eine hier hohl ausgebildete Nabenachse 2 und ein hier einteilig ausgebildetes Nabengehäuse 3, das über zwei Nabenflansche 26 zur Befestigung der Speichen verfügt. In anderen Ausgestaltungen kann das Nabengehäuse auch mehrteilig ausgebildet sein und beispielsweise über eine separate Nabenhülse und daran befestigte separate Nabenflansche 26 verfügen. Auch die Ausgestaltung der Nabe als "Straight-Pull-Nabe" ist möglich, bei der keine konventionellen Nabenflansche vorgesehen sind.

Der Rotor 4 dient zur Aufnahme wenigstens eines Ritzels und insbesondere zur Aufnahme eines Ritzelpaketes mit mehreren Ritzeln. Durch Auswählen eines entsprechenden Ritzels kann die Antriebsübersetzung wunschgemäß verändert werden.

Das Nabengehäuse ist in den beiden axialen Endbereichen des Nabengehäuses jeweils über ein Wälzlager 27 gegenüber der Nabenachse 2 gelagert. Ebenso ist der Rotor über zwei Lager 27 gegenüber der Nabenachse 2 gelagert.

Es ist ein Freilauf 5 vorgesehen, der hier als Zahnscheibenfreilauf ausgebildet ist. Der Freilauf dient dazu, das Antriebsdrehmoment auf das Nabengehäuse zu übertragen, während beispielsweise bei Bergabfahrten oder dergleichen eine Entkoppelung der Drehbewegungen des Nabengehäuses und des Rotors erfolgen kann.

Der Freilauf 5 verfügt im dargestellten Ausführungsbeispiel über zwei Freilaufkomponenten 6 und 7, die jeweils über axial ausgebildete Eingriffselemente 8, 9 verfügen, die in der in Figur 3 dargestellten Eingriffsstellung 10 miteinander im Eingriff sind.

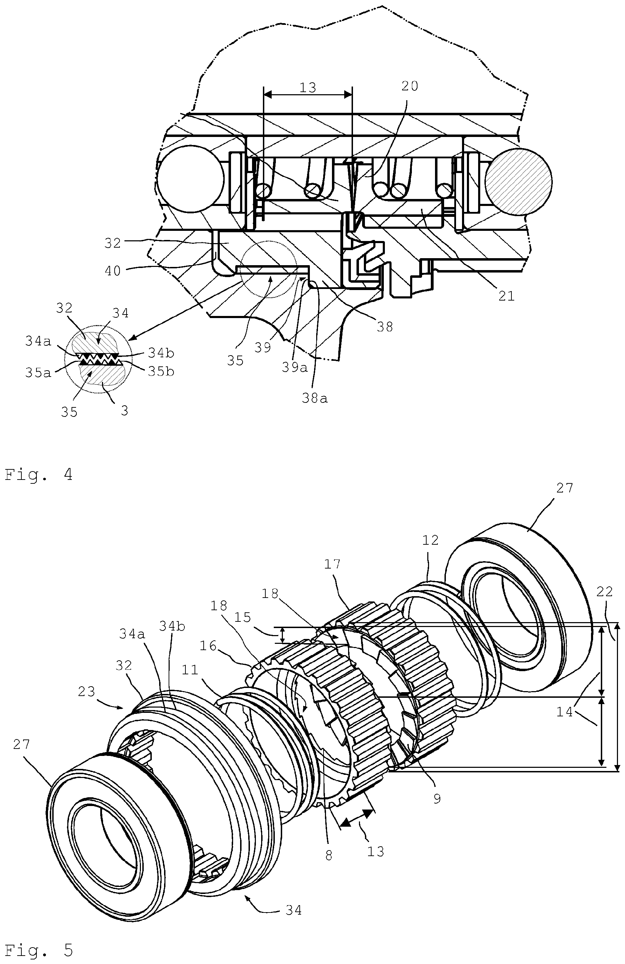

Die beiden Freilaufkomponenten 6, 7 sind im Ausführungsbeispiel jeweils als Zahnscheibe 16 bzw. 17 ausgebildet und weisen vorzugsweise einen identischen Aufbau auf. Die Eingriffselemente 8 und 9 bilden jeweils eine Axialverzahnung 18 (vgl. Fig. 5) an den Stirnseiten der Freilaufkomponenten 6, 7 bzw. Zahnscheiben 16, 17.

Der Querschnitt jeder Zahnscheibe ist hier insgesamt etwa U-förmig, wobei sich die Zahnscheibe 16 bzw. 17 geometrisch durch Zusammensetzung einer Lochscheibe bzw. Ringscheibe und einer Hülse ergibt. Die Axialverzahnung 18 ist jeweils an der axialen Stirnseite der Lochscheibe vorgesehen.

Möglich ist es auch, dass die Zahnscheiben massiv ausgebildet sind und innen eine hohlzylindrische Öffnung aufweisen. Bei derartigen Zahnscheiben sind an einer Stirnseite die Eingriffselemente (insbesondere in Form von Zähnen) ausgebildet und an der anderen Stirnseite greift eine Vorbelastungseinrichtung 11 oder 12 an, um die beiden Freilaufkomponenten 6, 7 in die Eingriffsstellung 10 vorzubelasten.

Die als Zahnscheibe 16 ausgeführte Freilaufkomponente 6 ist in dem als Gewindering 32 ausgeführten Nabenbauteil 23 axial verschiebbar, aber drehfest aufgenommen. Dazu weist die Zahnscheibe 16 eine Außenverzahnung auf, die in eine entsprechende Innenverzahnung des Gewinderings 32 eingreift, sodass eine axiale Bewegung möglich ist, während eine relative Drehbewegung der Zahnscheibe 16 zu dem Gewindering 32 nicht möglich ist.

Ein Vorteil des separaten Gewinderings 32 ist, dass der Gewindering 32 aus einem härteren und stabileren Material als das Nabengehäuse 3 gefertigt ist. Da das Volumen des Gewinderings 32 relativ klein ist, wird das Gesamtgewicht der Nabe nur geringfügig erhöht, dafür aber die Standzeit der Nabe deutlich verlängert.

Auf der radialen Außenseite des Gewinderings 32 ist ein mehrgängiges Gewinde 34 mit hier zwei separaten und axial beabstandeten Gewindegängen 34a und 34b ausgebildet, wie das vergrößerte Detail zeigt. Das mehrgängige Gewinde 34 des Gewinderings 32 ist mit einem entsprechenden mehrgängigen Innengewinde 35 in dem Nabengehäuse 3 verschraubt. Das mehrgängige Innengewinde 35 verfügt über zwei Gewindegänge 35a und 35b.

Die Steigung R der Gewindegänge der Gewinde 34 und 35 beträgt hier im Ausführungsbeispiel 2,0 mm (oder auch 3,0 mm), während die Teilung P jeweils 1,0 mm (bzw. 1,5 mm) beträgt. Das bedeutet, dass bei gleicher Teilung "P" die doppelte Steigung "R" vorliegt, wodurch die durch den Gewindering in axialer Richtung auf das Nabengehäuse ausgeübten Axialkräfte erheblich geringer sind, als im Stand der Technik, wo der Gewindering mit einem eingängigen Gewinde in das Nabengehäuse eingeschraubt war.

Durch die Mehrgängigkeit des Gewindes wird zwar grundsätzlich auch die Hemmung reduziert. Eine reduzierte Hemmung ist vorteilhaft, da der Gewindering durch den Betrieb ständig in das Nabengehäuse eingetrieben wird und ein selbstständiges Lösen insofern ausgeschlossen ist.

Das Lager 27 zur Lagerung des Nabengehäuses ist auf der Rotorseite gemäß der Figuren 3 und 4 radial zum Teil von dem Gewindering 32 umgeben. Ein direkter radialer Kontakt ist nicht nötig und liegt in der Regel nicht vor. Insbesondere stellt der Gewindering 32 keinen Lagersitz zur Verfügung. Der Lagersitz (mit entsprechend geringen Toleranzen) ist in dem Nabengehäuse 3 ausgebildet. Dort ist regelmäßig ein Presssitz vorgesehen, in den das Lager 27 eingepresst wird.

Die andere Freilaufkomponente 7 ist in diesem Ausführungsbeispiel als Zahnscheibe 17 ausgeführt und verfügt ebenfalls über eine unrunde Außenkontur und insbesondere eine Außenverzahnung, die in einer entsprechenden Innenverzahnung des Rotors 4 drehfest aber axial verschiebbar angeordnet ist.

In allen Ausgestaltungen sind der Rotor und das Nabengehäuse im (normalen) Betrieb in axialer Richtung fest beabstandet zueinander angeordnet.

Beide Zahnscheiben 16, 17 werden jeweils durch eine als Spiralfeder ausgeführte Vorbelastungseinrichtung 11 bzw. 12 in axialer Richtung aufeinander zu gedrückt, um die Axialverzahnungen 18 der beiden Zahnscheiben in Eingriff miteinander zu bringen. Dadurch wird in Antriebsrichtung eine Drehmomentübertragung von dem Rotor auf das Nabengehäuse 3 ermöglicht, während in umgekehrter Drehrichtung die Zähne der Zahnscheiben 8, 9 gegen die Kraft der Vorbelastungseinrichtungen 11, 12 auseinandergedrückt werden und auf ihren Zahnflanken aneinander vorbei gleiten.

Zur Dichtung ist zwischen dem Rotor 4 und dem Nabengehäuse 3 eine Dichtung 30 vorgesehen, die hier eine berührungslose Labyrinthdichtung und/oder auch eine berührende Elastomerdichtung umfassen kann, um Feuchtigkeit und Staub und und dergleichen von dem Freilauf 5 fernzuhalten.

An einem Ende ist hier ein Adapterring 28 vorgesehen und an dem anderen Ende ein Adapterring 29, die auf die Nabenachse 2 aufgeschoben sind und die an ihren äußeren Enden Bereiche aufweisen, die dafür geeignet sind, in die Ausfallenden einer Fahrradgabel oder eines Fahrradrahmens eingeschoben zu werden. Zur Befestigung dient beispielsweise ein Schnellspanner, der in Figur 3 nicht abgebildet ist. Ebenso ist es möglich, eine Steckachse zur Befestigung einzusetzen, wobei die Adapterringe 28 und 29 dann regelmäßig nicht oder nicht in dieser Form benötigt werden.

Der Adapterring 28 weist hier eine Doppelflanschdichtung 31 auf, die als doppelte Labyrinthdichtung wirkt und eine hohe Effektivität aufweist. In analoger Weise kann auch der Adapterring 29 ausgebildet sein und über eine Doppelflanschdichtung verfügen.

Als Lager 27 werden vorzugsweise handelsübliche Wälzlager eingesetzt, die über einen Außenring, einen Innenring und dazwischen angeordnete Wälzkörper verfügen. Die Wälzkörper sind vorzugsweise durch eine Halteeinrichtung, wie z. B. einen Wälzkörperkäfig oder dergleichen gehalten. Besonders bevorzugt sind an den axialen Enden der Wälzlager Dichtungen zum Schutz des Inneren des Wälzlagers angeordnet. Die Dichtungen können als Elastomerdichtungen ausgeführt sein. Vorzugsweise werden Rillenkugellager zur Lagerung eingesetzt.

Ein lichter Innendurchmesser der Freilaufkomponenten 6, 7 ist hier insbesondere nicht größer als die zweifache oder dreifache oder vierfache axiale Breite 13 der Zahnscheibe 16. Dadurch wird ein sicherer Sitz der Zahnscheibe 16 in dem Gewindering 32 gewährleistet und ein mögliches Verkanten beim hin- und herbewegen der Zahnscheibe 16 verhindert. Dadurch wird die Zuverlässigkeit des Zahnscheibenfreilaufs nochmals gesteigert.

Zur Versteifung kann eine hier gestrichelt dargestellte radiale Verdickung 33 vorgesehen sein. Die Verdickung 33 kann an der Nabenachse 2 nach innen ausgebildet sein. Es ist auch möglich, dass die Verdickung 33 radial nach außen vorgesehen ist.

Die Ableitung der Einspannkräfte am Rahmen erfolgt durch die Innenringe der Lager 27, die Hülsen 36 und 37 und durch einen Teil der Nabenachse 2, in die über radiale Verdickungen an den Lagern 27 zur Lagerung des Nabengehäuses 3 die Einspannkraft eingeleitet bzw. wieder ausgeleitet wird. An den äußeren Enden werden hier die Einspannkräfte durch die Adapterringe 28 und 29 abgeleitet.

In den Figuren 4 und 5 ist der Zahnscheibenfreilauf in einem vergrößerten Querschnitt bzw. in einer Explosionsdarstellung vergrößert dargestellt, um die Einzelheiten besser darstellen zu können.

Dabei zeigt Figur 4 den Bereich des Gewinderings 32 in einer vergrößerten Darstellung. Zusätzlich ist wiederum vergrößert nochmals ein Detail mit den mehrgängigen Gewinden 34, 35 in dem Gewindering 32 und dem Nabengehäuse 3 abgebildet. Die beiden mehrgängigen Gewinde 34, 35 greifen mit ihren Gewindegängen 34a und 34b in die Gewindegänge 35a und 35a in dem Nabengehäuse ein, um den Gewindering 32 sicher an dem Nabengehäuse aufzunehmen. Die mehrgängigen Gewinde sorgen für eine zuverlässige Führung und einen sicheren Halt des Gewinderings 32 in dem Nabengehäuse 3.

Wie hier in Figur 4 gut zu erkennen ist, weist der Gewindering am axial äußeren Ende einen leicht vergrößerten (und hier) umlaufenden Flansch 38 auf, an dessen axialem inneren Ende ein Anschlag 38a ausgebildet ist, der an einem entsprechenden Anschlag 39a eines radialen Absatzes 39 in dem Nabengehäuse 3 anliegt. Eine solche Ausgestaltung führt dazu das am inneren axialen Ende des Gewinderings ein (geringerer) Spalt 40 zwischen dem inneren axialen Ende des Gewinderings 32 und dem Körper des Nabengehäuses 3 verbleibt. Auch diese Ausgestaltung trägt dazu bei, die auf das Nabengehäuse einwirkenden Axialkräfte zu begrenzen.

In Figur 5 ist eine Explosionsdarstellung gezeigt, wobei der Außenradius 14 der Axialverzahnungen 18 hier nicht größer ist als die doppelte axiale Breite 13 der Zahnscheiben 16, 17. Die axiale Breite 13 der Zahnscheiben 16, 17 ist wenigstens so groß wie 30 % oder 40 % oder der halbe Außenradius 14 der Axialverzahnungen 8 bzw. 9.

In Figur 5 sind nur stark schematisch zwei Gewindegänge 34a und 34b auf der Außenoberfläche des Gewinderings 32 eingezeichnet, die zusammen ein mehrgängiges Gewinde 34 ergeben.

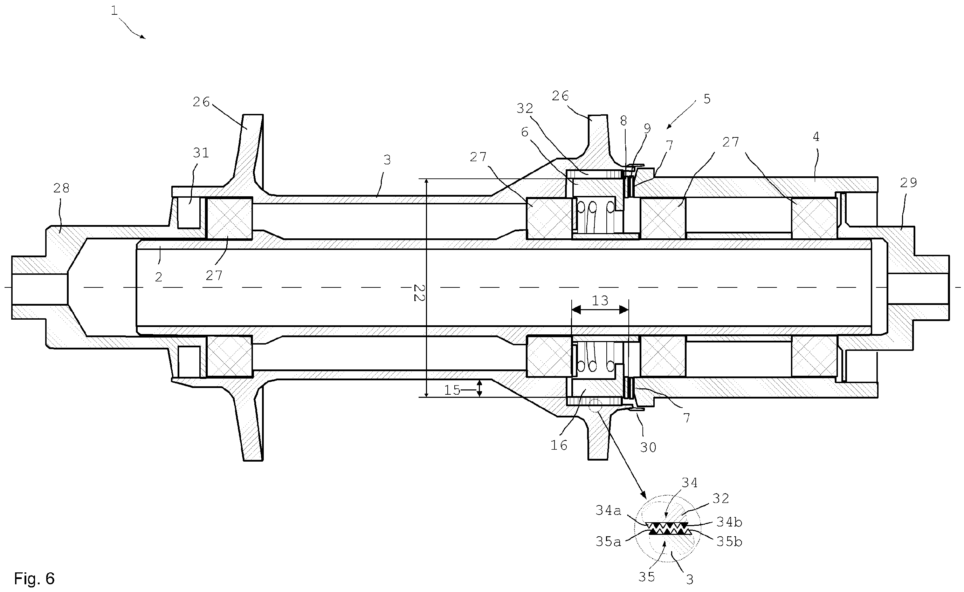

Figur 6 zeigt ein anderes Ausführungsbeispiel einer erfindungsgemäßen Nabe, die im Wesentlichen gleich aufgebaut ist wie die erfindungsgemäße Nabe gemäß Figur 3. Deshalb werden gleiche oder ähnliche Teile auch mit den gleichen Bezugszeichen versehen.

Die Nabe 1 im Ausführungsbeispiel nach Figur 6 verfügt über einen Nabenachse 2 und ein Nabengehäuse 3, welches mit Nabenflanschen 26 ausgerüstet ist. Das Nabengehäuse 3 ist über zwei Lager 27 drehbar gegenüber der Nabenachse 2 gelagert. Der Rotor ist ebenfalls über zwei Lager 27 gegenüber der Nabenachse drehbar gelagert.

Zwischen dem Nabengehäuse 3 und dem Rotor 4 ist ein Freilauf 5 vorgesehen, der wiederum Freilaufkomponenten 6 und 7 umfasst. Eine berührungslose und/oder berührende Dichtung kann zwischen dem Rotor 4 und dem Nabengehäuse 3 vorhanden sein.

In diesem Ausführungsbeispiel sind die Freilaufkomponenten 6 und 7 nicht identisch, sondern unterschiedlich ausgebildet. Während die Freilaufkomponente 6 als Zahnscheibe 16 ausgeführt ist, ist die Freilaufkomponente 7 als Stirnverzahnung an einem axialen Ende des Rotors (insbesondere einstückig damit) ausgebildet. Dadurch steht das axiale Ende des Rotors 4 mit der daran vorgesehenen Axialverzahnung 18 in Eingriff mit der Axialverzahnung 18 der Zahnscheibe 16.

Die Zahnscheibe 16 wird in axialer Richtung durch eine hier als Spiralfeder ausgebildete Vorbelastungseinrichtung 11 in Richtung auf den Rotor 4 vorbelastet, sodass die Zähne der Axialverzahnungen 18 in der Regel im Eingriff miteinander stehen.

Im Ausführungsbeispiel sind die zur Lagerung des Nabengehäuses 3 benachbart zu der Zahnscheibe 16 vorgesehenen Lager 27 beispielsweise mit einer Presspassung eingefügt.

Ein Gewindering 32 zur Aufnahme der Zahnscheibe 16 ist in Figur 3 mit einem mehrgängigen Außengewinde 34 ausgerüstet, welches mit einem entsprechenden mehrgängigen Innengewinde 35 in dem Nabengehäuse 3 verschraubt ist.

In dem vergrößerten Detail unterhalb von Figur 6 ist schematisch der Bereich der ineinander eingreifenden mehrgängigen Gewinde 34 und 35 abgebildet, wobei hier der Einfachheit halber zwei Gewindegänge an den Gewinden 34 und 35 gekennzeichnet sind. Auch hier ist die Steigung der einzelnen Gewindegänge 34a, 34b und 35a, 35b doppelt so groß, wie es bei einem eingängigen Gewinde der Fall wäre. Die Teilung des Gebindes bleibt aber gleich. Das führt zu verringerten Axialbelastungen auf das Nabengehäuse 3, wodurch die Wandstärken an dem Nabengehäuse reduziert werden können. Dadurch kann das Gesamtgewicht verringert werden und es ist auch möglich, den Luftwiderstand zu senken, da beispielsweise die Querschnittsfläche verringert werden kann.

Insgesamt stellt die Erfindung eine vorteilhafte Nabe 1 zu Verfügung, welche ein geringeres Gewicht bei erhöhter Steifigkeit und verbesserter Haltbarkeit zur Verfügung stellt.

**Bezugszeichenliste:**

| | | | |
|---|---|---|---|
| 1 | Nabe | 34a | Gewindegang |
| 2 | Nabenachse | 34b | Gewindegang |
| 3 | Nabengehäuse | 35 | Gewinde |
| 4 | Rotor | 35a | Gewindegang |
| 5 | Freilauf | 35b | Gewindegang |
| 6 | Freilaufkomponente | 36 | Hülse |
| 7 | Freilaufkomponente | 37 | Hülse |
| 8 | Eingriffselement | 38 | Flansch |
| 9 | Eingriffselement | 38a | Anschlag |
| 10 | Eingriffsstellung | 39 | Absatz |
| 11 | Vorbelastungseinrichtung | 39a | Anschlag |
| 12 | Vorbelastungseinrichtung | 40 | Spalt |
| 13 | axiale Breite | 50 | Fahrrad |
| 14 | äußerer Radius | 51 | Vorderrad |
| 15 | radiale Erstreckung | 52 | Hinterrad |
| 16 | Zahnscheibe | 53 | Rahmen |
| 17 | Zahnscheibe | 54 | Gabel |
| 18 | Axialverzahnung | 55 | Hinterraddämpfer |
| 19 | Innendurchmesser | 56 | Lenker |
| 20 | radialer Schenkel | 57 | Sattel |
| 21 | axialer Schenkel | 58 | Batterie |
| 22 | Außendurchmesser | 59 | Speiche |
| 23 | Nabenbauteil | 60 | Reifen |
| 24 | Nabenbauteil | 61 | Felge |
| 25 | Außenradius | 100 | Fahrzeug |
| 26 | Nabenflansch | | |
| 27 | Lager | | |
| 28 | Adapterring | | |
| 29 | Adapterring | | |
| 30 | Dichtung | | |
| 31 | Doppelflanschdichtung | | |
| 32 | Nabenbauteil, Gewindering | | |
| 33 | Verdickung | | |
| 34 | Gewinde | | |

## Patentansprüche

1. Nabe (1) für wenigstens teilweise muskelbetriebene Fahrzeuge (100) und insbesondere Zweiräder (50) mit einer Nabenachse (2) und einem Nabengehäuse (3) und einem Rotor (4) und mit einem Freilauf (5), welcher zwei miteinander zusammenwirkende Freilaufkomponenten (6, 7) aufweist, nämlich einer nabenseitigen Freilaufkomponente (6) und einer rotorseitigen Freilaufkomponente (7),
wobei die Freilaufkomponenten (6, 7) jeweils axiale Eingriffselemente (8, 9) zum Eingriff ineinander aufweisen und über wenigstens eine Vorbelastungseinrichtung (11, 12) in Eingriffsstellung (10) vorbelastet werden,
wobei die nabenseitige Freilaufkomponente (6) in einem Gewindering (32) axial verschiebbar aufgenommen und drehfest mit dem Nabengehäuse (3) gekoppelt ist und wobei die rotorseitige Freilaufkomponente (7) drehfest an dem Rotor (4) vorgesehen ist, um in der Eingriffsstellung (10) der beiden Freilaufkomponenten (6, 7) eine Drehbewegung von dem Rotor (4) auf das Nabengehäuse (3) zu übertragen,
**dadurch gekennzeichnet,**
**dass** der Gewindering (32) über ein mehrgängiges Gewinde (34) verfügt und mit einem mehrgängigen Gewinde (35) des Nabengehäuses (3) verschraubt ist.

2. Nabe nach dem vorhergehenden Anspruch, wobei der Gewindering aus einem stabileren Material als das Nabengehäuse besteht.

3. Nabe nach einem der vorhergehenden Ansprüche, wobei an dem Gewindering (32) ein mehrgängiges Außengewinde (34) und an dem Nabengehäuse (3) ein mehrgängiges Innengewinde (35) ausgebildet sind, welche im montierten Zustand miteinander verschraubt sind.

4. Nabe (1) nach mindestens einem der vorhergehenden Ansprüche,
wobei ein Gewindegang wenigstens eines der mehrgängigen Gewinde eine Steigung von wenigstens 1,5 mm aufweist.

5. Nabe (1) nach mindestens einem der vorhergehenden Ansprüche,
wobei ein Gewindegang wenigstens eines der mehrgängigen Gewinde eine Steigung von wenigstens 1,8 mm aufweist.

6. Nabe (1) nach mindestens einem der vorhergehenden Ansprüche,
wobei ein Gewindegang wenigstens eines der mehrgängigen Gewinde eine Steigung von wenigstens 2,5 mm oder 3,0 mm oder mehr aufweist.

7. Nabe (1) nach mindestens einem der vorhergehenden Ansprüche,
wobei die mehrgängigen Gewinde zwei, drei oder mehr voneinander separate und parallel zueinander ausgerichtete Gewindegänge aufweisen.

8. Nabe nach wenigstens einem der vorhergehenden Ansprüche,
wobei die Eingriffselemente (8, 9) jeweils eine Axialverzahnung (38, 39) bilden und wobei wenigstens eine der beiden Freilaufkomponenten (6) als Zahnscheibe (16) ausgebildet ist.

9. Nabe nach einem der vorhergehenden Ansprüche, wobei ein Querschnitt der Freilaufkomponente (16, 17) U- oder L-förmig gestaltet ist und wobei an dem radialen Schenkel (20) die Eingriffselemente (8, 9) vorgesehen ist.

10. Nabe nach wenigstens einem der vorhergehenden Ansprüche,
wobei die Freilaufkomponente (16, 17) eine unrunde Außenkontur aufweist und in einer entsprechend unrunden Innenkontur des Gewinderings (32) oder des Rotors (23, 24) drehfest und axial verschiebbar aufgenommen ist.

11. Nabe nach wenigstens einem der vorhergehenden Ansprüche,
wobei die Vorbelastungseinrichtung (11, 12) wenigstens teilweise im Inneren der Freilaufkomponente (6, 7) angeordnet ist.

12. Nabe nach wenigstens einem der vorhergehenden Ansprüche,
wobei die Vorbelastungseinrichtung (11, 12) in axialer Richtung gegen den radialen Schenkel (20) der Freilaufkomponente (6, 7) drückt.

13. Nabe nach wenigstens einem der vorhergehenden Ansprüche,
wobei die Eingriffselemente (9) der rotorseitigen Freilaufkomponente (7) als Stirnverzahnung an dem Rotor (4) ausgebildet ist.

14. Nabe nach wenigstens einem der vorhergehenden Ansprüche,
wobei die rotorseitige Freilaufkomponente axial weiter außen angeordnet ist als die nabenseitige Freilaufkomponente.

15. Nabe (1) nach mindestens einem der vorhergehenden Ansprüche,
wobei wenigstens eine Freilaufkomponente und der Gewindering aus Stahl und dem Nabengehäuse wenigstens teilweise aus wenigstens einem leichten Material wie Leichtmetall oder Faserverbundwerkstoff besteht.
